# EUROPÄISCHE PATENTSCHRIFT

(11) **EP 0 421 090 B1**
(45) Veröffentlichungstag und Bekanntmachung des Hinweises auf die Patenterteilung: **03.03.1993**
(21) Anmeldenummer: 90115437.7
(22) Anmeldetag: 11.08.1990
(51) Int. Cl.: B60K 11/04

(54) **Halterung für einen Kühler**
Radiator attachment
Fixation d'un radiateur

(30) Priorität: 06.10.1989 DE 3933410
(43) Veröffentlichungstag der Anmeldung: 10.04.1991
(73) Patentinhaber: MERCEDES-BENZ AG, 70327 Stuttgart (DE)
(72) Erfinder: Attinger, Thomas, D-7000 Stuttgart 70 (DE); Plonus, Frank, D-7000 Stuttgart 80 (DE)

(56) Entgegenhaltungen:
- DE-A- 2 634 990
- DE-C- 3 246 583
- DE-U- 8 634 544

## Beschreibung

Die Erfindung betrifft eine Halterung für einen Kühler an einem Kraftfahrzeug gemäß dem Oberbegriff des Patentanspruchs 1.

Aus der DE-A-26 34 990 ist eine Kühlerbefestigung für Kraftfahrzeuge bekannt, bei der an sich gegenüberliegenden Randzonen des Kühlers Zapfen angeformt sind. Diese Zapfen werden in Gummiringe eingeführt, die in fahrzeugfesten Trägern gehalten sind. Bei einem Ausführungsbeispiel der DE-OS werden die auf der Kühleroberseite angeformten Zapfen in entsprechende mit Gummiringen versehene fahrzeugfeste Lager eingeführt und anschließend ein an einer Konsole angebrachter Gummiring über den an der Unterseite des Kühlers angeformten Zapfen geführt. Die Konsole wird darauf mit dem Fahrzeug verschraubt. Dies weist den Nachteil auf, daß der Kühler während des Einbaus gehalten werden muß, bis die Konsole mit dem Fahrzeug verbunden ist.

Bei einem anderen Ausführungsbeispiel der genannten DE-A wird der Kühler mit seinen an seiner Unterseite angeformten Zapfen in entsprechende an einem fahrzeugfesten Teil angebrachte Gummiringe eingesetzt. An seiner Oberseite trägt der Kühler im Winkel zu den Zapfen der Unterseite angeordnete Zapfen, welche durch ein Kippen des Kühlers - nach erfolgtem Einsetzen in das untere Lager - in Gummiringe eingesetzt werden, die an einem fahrzeugfesten Lager angeordnet sind. Um ein Kippen des Kühlers während des Betriebs des Fahrzeugs zu vermeiden, muß dieser gesichert werden. Dies geschieht dadurch, daß nach dem Einsetzen der oberen Zapfen in die korrespondierenden Gummiringe der Kühler an seiner Oberseite über gesonderte Sicherungsglieder in seiner Position fixiert wird.

Aufgabe der Erfindung ist es daher, eine Kühlerhalterung der gattungsgemäßen Art so zu gestalten, daß der Kühler in einfacher Weise ein- und ausgebaut werden kann und dennoch in seiner Einbauposition gesichert gehalten ist.

Die Aufgabe wird erfindungsgemäß durch die im kennzeichnenden Teil des Patentanspruchs 1 genannten Merkmale gelöst. Weitere Vorteile und Ausgestaltungen gehen aus den Unteransprüchen und der Beschreibung hervor.

Ein Kühler eines Kraftfahrzeugs weist an zwei seiner gegenüberliegenden Schmalseiten je zwei mit Abstand voneinander angeordnete Zapfen auf. Die Zapfen tragen sie umgebende elastische Hülsen und werden mit diesen in entsprechenden Lagerbohrungen zweier fahrzeugfester Träger aufgenommen. Jede Lagerbohrung ist mit einem Aufnahmeschlitz zur Einführung des von der elastischen Hülse umgebenen Zapfens versehen, wobei die Breite des Aufnahmeschlitzes schmaler als der Durchmesser der dazugehörigen Lagerbohrung ist. Die Aufnahmeschlitze der in einer Ebene liegenden beiden Lagerbohrungen in den beiden Trägern weisen die selbe Richtung auf und sind gegenüber den Aufnahmeschlitzen der in der anderen Ebene liegenden Lagerbohrungen in einem Winkel von annähernd 90° versetzt angeordnet. Die in einer Ebene liegenden Zapfen des Kühlers werden mitsamt den sie umgebenden elastischen Hülsen durch die entsprechenden Aufnahmeschlitze in die dazugehörigen Lagerbohrungen gebracht und der gesamte Kühler anschließend geschwenkt, bis die beiden in der anderen Ebene liegenden Zapfen durch die entsprechenden Aufnahmeschlitze in den jeweiligen Lagerbohrungen zu liegen kommen und der Kühler somit seine Einbauposition einnimmt. In dieser Position werden elastische Hülsen über die Zapfen geschoben, so daß der Kühler am Kippen aus seiner Einbauposition gehindert wird und in dieser Position gehalten ist. Hierzu sind weder weitere Befestigungsmittel noch besondere Montagewerkzeuge erforderlich.

Ein Ausführungsbeispiel der Erfindung ist nachstehend anhand der Zeichnung beschrieben. Es zeigt
Figur 1 einen Teil eines Kühlers mit einer erfindungsgemäßen Halterung in der Vorderansicht,
Figur 2 die erfindungsgemäße Halterung nach Figur 1 in der Seitenansicht.

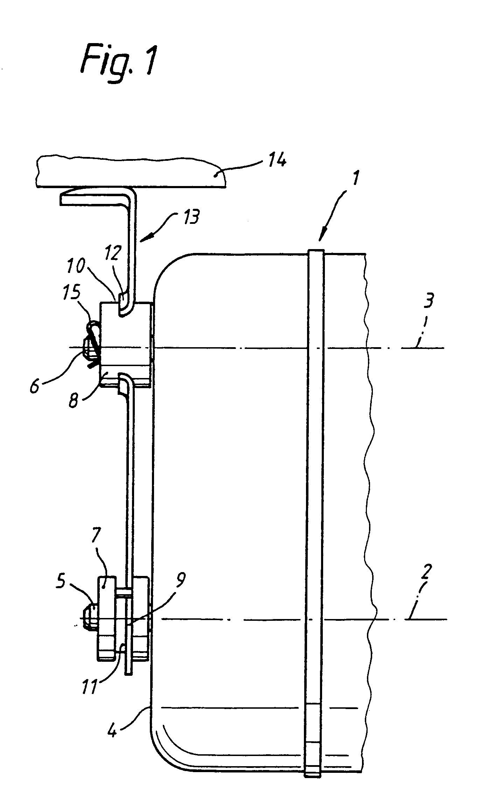

In der Figur 1 ist ein Teil eines Kühlers 1 eines Fahrzeugs, z.B. eines Wasserkühlers oder eines Ölkühlers, in der Vorderansicht dargestellt. Die andere Kühlerseite und ihre Befestigung sind spiegelbildlich gleich aufgebaut und brauchen daher nicht näher dargestellt und beschrieben zu werden. An der Schmalseite 4 des Kühlers 1 sind in zwei eine Hochachse des Kühlers in unterschiedlichen Höhen schneidenden querverlaufenden Ebenen 2 und 3 Zapfen 5 bzw. 6 angeformt. Auf diese Zapfen 5 bzw. 6 sind Hülsen 7 bzw. 8 aus elastischem Material, wie z.B. Gummi, aufgeschoben, mit welchen der Kühler 1 in entsprechende Lagerbohrungen 9 bzw. 10, die jede einen umbördelten Rand 11 bzw. 12 aufweist, eines auf jeder der beiden Schmalseiten 4 des Kühlers 1 vorgesehenen fahrzeugfesten Trägers 13 eingesetzt ist. Die Befestigung des Trägers 13 an einem fahrzeugfesten Teil 14 kann auf unterschiedliche Weise erfolgen und ist hier nicht dargestellt. Die aufgeschobenen Hülsen 7 bzw. 8 können auf den entsprechenden Zapfen 5 bzw. 6 - wie am Beispiel des Zapfens 6 gezeigt ist - mittels einer Sicherungsklammer 15 fixiert werden.

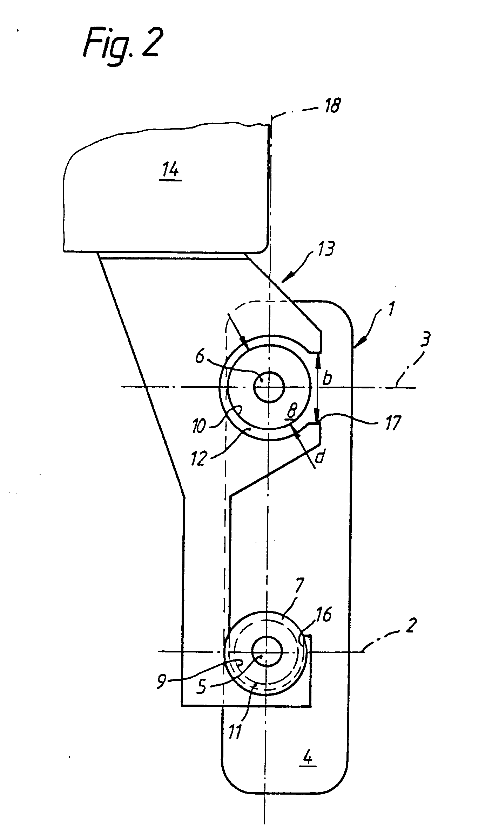

Die Figur 2 zeigt den Kühler 1 mit einem seiner beiden Träger 13 in einer Seitenansicht. Der Träger 13 ist wie schon in Figur 1 beschrieben mit einem fahrzeugfesten Teil 14 verbunden. An jeder Schmalseite 4 des Kühlers 1 sind in den Ebenen 2 und 3 die Zapfen 5 bzw. 6 angeformt, die jeweils eine sie umgebende elastische Hülse 7 bzw. 8 tragen.

Diese Hülsen 7 und 8 können einfach auf die Zapfen 5 und 6 aufgeschoben sein oder z.B. über ein in ihnen angeordnetes Innengewinde auf die Zapfen 5 und 6 aufgeschraubt werden. Die in Figur 1 beschriebene Fixierung mittels einer Sicherungsklammer ist hier aus Gründen der Übersichtlichkeit nicht dargestellt. Der Träger 13 weist in den Ebenen 2 und 3 Lagerbohrungen 9 bzw. 10 auf, die mit einem umbördelten Rand 11 bzw. 12 versehen sind. Der Einbau des Kühlers 1 in das Fahrzeug erfolgt derart, daß der Kühler 1 mit seinem von der Hülse 7 umgebenen Zapfen 5 in leicht gekipptem Zustand von oben über den nach oben offenen Aufnahmeschlitz 16 in die Lagerbohrung 9 eingesetzt wird, in welcher er elastisch gehalten ist. Anschließend wird die Hochachse 18 des Kühlers 1 um den Zapfen 5 in die senkrechte gekippt, so daß der obere Zapfen 6 zum Aufnahmeschlitz 17 bewegt wird, der die obere Lagerbohrung 10 zur Seite hin öffnet und dessen Breite b geringer ist als der Durchmesser d dieser Lagerbohrung 10. Der Zapfen 6 wird durch den Aufnahmeschlitz 17 in die obere Lagerbohrung 10 eingeführt, worauf die Hülse 8 von außen durch die Lagerbohrung 10 über den Zapfen 6 aufgeschoben wird. In dieser Position befindet sich der Kühler 1 in vertikaler Stellung und wird sowohl vom oberen, als auch vom unteren Lager elastisch getragen und in dieser Stellung gegen Kippen gesichert gehalten. Gegen ein Herabfallen der Hülse 8 vom Zapfen 6 kann diese mittels der schon erwähnten, hier nicht dargestellten, Sicherungsklammer 15 fixiert werden.

Es versteht sich von selbst, daß die Anordnung der Aufnahmeschlitze 16 und 17 auch vertauscht werden kann, indem der nach oben offene Aufnahmeschlitz unter geeigneter Ausgestaltung des Trägers 13 als oberes Lager eingesetzt wird, während der zur Seite hin offene Aufnahmeschlitz mit seiner Lagerbohrung als unteres Lager dient.

Mit dieser Befestigung ist der Kühler 1 gegen ein Zurückkippen gesichert und gleichzeitig von der Fahrzeugkarosserie elastisch abgekoppelt. Außerdem kann bei einer Kühlerhalterung nach der Erfindung der Kühler 1 auch bei beengten Platzverhältnissen einfach montiert und demontiert werden.

## Patentansprüche

1. Halterung für einen Kühler (1) an einem Kraftfahrzeug (14) mit je zwei an gegenüberliegenden Kühlerschmalseiten (4) in zwei parallel zueinander verlaufenden Ebenen (2,3) angeordneten Zapfen (5,6), die in entsprechenden Lagerbohrungen (9,10) von fahrzeugfesten Trägern gehalten sind,
**dadurch gekennzeichnet,**
daß die Lagerbohrungen (9, 10) mit je einem Aufnahmeschlitz (16, 17) für einen Zapfen (5, 6) versehen sind und daß die Aufnahmeschlitze (16) an den Lagerbohrungen (9) zur Aufnahme der Zapfen (5) der einen Ebene (2) gegenüber den Aufnahmeschlitzen (17) an den Lagerbohrungen (10) zur Aufnahme der Zapfen (6) der anderen Ebene (3) in einem Winkel von etwa 90° versetzt angeordnet sind.

2. Halterung für einen Kühler (1) nach Anspruch 1,
**dadurch gekennzeichnet,**
daß die Breite (b) der Aufnahmeschlitze (16, 17) schmaler als der Durchmesser (d) der Lagerbohrungen (9, 10) ist.

3. Halterung für einen Kühler (1) nach Anspruch 1 oder 2,
**dadurch gekennzeichnet,**
daß die Zapfen (5, 6) mit einer sie umgebenden elastischen Hülse (7, 8) versehen sind.

4. Halterung für einen Kühler (1) nach Anspruch 3,
**dadurch gekennzeichnet,**
daß die elastische Hülse (7, 8) durch ein Sicherungselement (15) auf dem Zapfen (5, 6) fixiert ist.

5. Halterung für einen Kühler (1) nach einem der Ansprüche 1 bis 4,
**dadurch gekennzeichnet,**
daß die zwei Aufnahmeschlitze (16 bzw. 17) an einem in einer Ebene (2 bzw. 3) liegenden Lagerpaar (9 bzw. 10) der Träger (13) parallel zur Kühlerhochachse (18) verlaufen und daß die beiden Aufnahmeschlitze (17 bzw. 16) des jeweils anderen in der zweiten Ebene (3 bzw. 2) liegenden Lagerpaares (10 bzw. 9) der Träger (13) sich senkrecht zur Kühlerhochachse (18) erstrecken.

## Claims

1. Mounting for a cooler (1) on a motor vehicle (14), having in each case two journals (5, 6) which are arranged in two mutually parallel planes (2, 3) on opposite narrow sides (4) of the cooler and are held in corresponding bearing bores (9, 10) of supports fixed to the vehicle, characterised in that the bearing bores (9, 10) are each provided with a receiving slot (16, 17) for a journal (5, 6) and in that the receiving slots (16) on the bearing bores (9) for receiving the journals (5) of the one plane (2) are arranged offset at an angle of about 90° relative to the receiving slots (17) on the bearing bores (10) for receiving the journals (6) of the other plane (3).

2. Mounting for a cooler (1) according to Claim 1, characterised in that the width (b) of the receiving slots (16, 17) is narrower than the diameter (d) of the bearing bores (9, 10).

3. Mounting for a cooler (1) according to Claim 1 or 2, characterised in that the journals (5, 6) are provided with a resilient sleeve (7, 8) which surrounds them.

4. Mounting for a cooler (1) according to Claim 3, characterised in that the resilient sleeve (7, 8) is fixed on the journal (5, 6) by a securing element (15).

5. Mounting for a cooler (1) according to one of Claims 1 to 4, characterised in that the two receiving slots (16 or 17) on one bearing pair (9 or 10) of the supports (13), said pair lying in one plane (2 or 3), extend parallel to the vertical axis (18) of the cooler, and in that the two receiving slots (17 or 16) of the other bearing pair (10 or 9) of the supports (13) in each case, said pair lying in the second plane (3 or 2), extend perpendicular to the vertical axis (18) of the cooler.

## Revendications

1. Support pour un radiateur (1) sur un véhicule automobile (14), comportant respectivement deux tourillons (5, 6) disposés sur des côtés étroits (4) mutuellement opposés du radiateur dans deux plans (2, 3) mutuellement parallèles, qui sont maintenus dans des trous d'appui (9, 10) correspondants de supports solidaires du véhicule, caractérisé en ce que les trous d'appui (9, 10) sont chacun pourvus d'une fente (16, 17) de réception d'un tourillon (5, 6) et en ce que les fentes de réception (16) au niveau des trous d'appui (9) pour recevoir les tourillons (5) d'un des plans (2) sont disposées avec un décalage d'un angle d'environ 90° par rapport aux fentes de réception (17) au niveau des trous d'appui (10) pour recevoir les tourillons (6) de l'autre plan (3).

2. Support pour un radiateur (1) selon la revendication 1, caractérisé en ce que la largeur (b) des fentes de réception (16, 17) est plus petite que le diamètre (d) des trous d'appui (9, 10).

3. Support pour un radiateur (1) selon la revendication 1 ou 2, caractérisé en ce que les tourillons (5, 6) sont pourvus d'un fourreau élastique (7, 8) les entourant.

4. Support pour un radiateur (1) selon la revendication 3, caractérisé en ce que le fourreau élastique (7, 8) est fixé par un élément d'arrêt (15) sur le tourillon (5, 6).

5. Support pour un radiateur (1) selon une des revendications 1 à 4, caractérisé en ce que les deux fentes de réception (16 ou 17) au niveau d'une paire d'appuis (9 ou 10) du support (13) qui est située dans un plan (2 ou 3) sont orientées parallèlement à l'axe vertical (18) du radiateur et en ce que les deux fentes de réception (17 ou 16) au niveau de l'autre paire d'appuis (10 ou 9) du support (13), située dans le second plan (3 ou 2),sont orientées perpendiculairement à l'axe vertical (18) du radiateur.
